# EUROPÄISCHE PATENTSCHRIFT

(11) **EP 1 775 437 B1**
(45) Veröffentlichungstag und Bekanntmachung des Hinweises auf die Patenterteilung: **05.03.2008**
(21) Anmeldenummer: 05022095.3
(22) Anmeldetag: 11.10.2005
(51) Int. Cl.: F01N 7/14, B60R 13/08, F02B 77/11

(54) **Hitzeschild in Sandwich-Bauweise**
Heat shield in sandwich construction
Bouclier thermique à structure sandwich

(43) Veröffentlichungstag der Anmeldung: 18.04.2007
(73) Patentinhaber: REINZ-Dichtungs-GmbH, 89233 Neu-Ulm (DE)
(72) Erfinder: Duckek, Uwe, 89134 Markbronn (DE); Görlich, Bruno, 89264 Weissenhorn (DE)
(74) Vertreter: Tomerius, Isabel

(56) Entgegenhaltungen:
- EP-A- 0 586 077
- DE-A1- 10 253 832
- DE-U1- 9 107 484
- GB-A- 2 270 555
- US-A- 5 524 406
- US-A- 5 670 264
- US-A1- 2004 142 152

## Beschreibung

Die Erfindung betrifft einen Hitzeschild in Sandwich-Bauweise mit einer ersten und einer zweiten dreidimensional verformten Metalllage, die entlang ihres Außenrandes dadurch miteinander verbunden sind, dass ein Außenrandabschnitt einer der Metalllagen um den Außenrand der anderen Metalllage herum auf diese zurück gebördelt ist. Derartige Hitzeschilde werden als Schall- und/oder Hitzeschutz für andere Bauteile verwendet. Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallschutz. Zur Verbesserung der Dämmeigenschaften ist zwischen den beiden Metalllagen häufig eine Isolationsschicht eingeschlossen. Die Isolationsschicht besteht beispielsweise aus Glimmer, temperaturstabilem Papier, anorganischen oder organischen Faserverbundmaterialien oder anderen geeigneten Dämmstoffen. Die metallischen Lagen bestehen üblicherweise aus Stahl, aluminiumplattiertem Stahl oder Aluminium.
Hitzeschilde aus mehreren Lagen, die zumindest teilweise dreidimensionale Strukturen aufweisen, um ein unmittelbares Aufeinanderliegen der Lagen zu verhindern und so die Isolationseigenschaften zu verbessern, sind beispielsweise in der EP 0586077 A1, GB 2270555 A und US 5670264 A beschrieben. Die einzelnen Lagen können durch Umbördeln eines Außenrandabschnitts einer äußeren Lage um den Rand der anderen äußeren Lage verbunden werden.

Die Hitzeschilde sind in ihrer Form in aller Regel den zu schützenden Bauteilen und ihrer sonstigen Umgebung angepasst. Gerade im Bereich von Verbrennungsmotoren, wo ein Trend dahin geht, zur Verkleinerung des Motorraumes die benötigten Bauteile möglichst Platz sparend und dicht beieinander anzuordnen, müssen Hitzeschilde oft sehr stark dreidimensional verformt werden. Diese dreidimensionale Verformung erfolgt bei Hitzeschilden in Sandwich-Bauweise in der Regel, nachdem die einzelnen, zunächst planen Lagen des Hitzeschildes miteinander verbunden worden sind. Bei der Verformung wird das Material der Sandwichlagen durch Stauchungen und Dehnungen starken Spannungen ausgesetzt. Diese Spannungen wirken besonders auf den Außenrandbereich ein, in dem die äußeren metallischen Lagen miteinander verbunden sind. Im Falle der Verbindung der Metalllagen durch Umbördelung des Außenrandabschnitts der einen Metalllage um den Außenrandbereich der anderen Metalllage besteht dabei die Gefahr, dass im Bereich des Bördels Risse entstehen und sich der Bördel in stark gekrümmten Bereichen öffnet. Bei sehr stark dreidimensional verformten Hitzeschilden war es daher bislang üblich, den Hitzeschild in mehrere gesonderte Bereiche aufzuteilen, diese jeweils für sich herzustellen und dreidimensional zu verformen und erst anschließend durch beispielsweise Nieten oder Verschweißen miteinander zum fertigen Hitzeschild zu verbinden. Dieses Verfahren ist jedoch aufwändig und teuer.

Es bestand daher ein Bedarf an einem Hitzeschild in Sandwich-Bauweise, der sich auf einfache und kostengünstige Weise und unter Verwendung eines Bördels als Verbindung zwischen den äußeren Metalllagen herstellen lässt, ohne dass eine starke dreidimensionale Verformung zu Problemen wie Aufgehen oder Rissbildung im Bördelbereich führt. Aufgabe der Erfindung ist es, einen solchen Hitzeschild und ein Verfahren zu seiner Herstellung anzugeben.

Die Lösung dieser Aufgabe gelingt mit dem Hitzeschild gemäß Anspruch 1 sowie dem Verfahren gemäß Anspruch 12. Bevorzugte Ausführungsformen und Verfahrensvarianten sind den jeweiligen Unteransprüchen zu entnehmen.

In einem ersten Aspekt betrifft die Erfindung demnach einen Hitzeschild mit einer ersten und einer zweiten gemeinsam dreidimensional verformten Metalllage, die dadurch miteinander verbunden sind, dass ein Außenrandabschnitt der ersten Metalllage im Wesentlichen vollständig umlaufend um den Außenrand der zweiten Metalllage herum auf die zweite Metalllage gebördelt ist. Der Bördel kann dabei auf der Innenseite oder der Außenseite des Hitzeschildes zu liegen kommen. Insoweit entspricht der erfindungsgemäße Hitzeschild den Hitzeschilden des Standes der Technik. Unter einem im Wesentlichen vollständig umlaufend umgebördelten Außenrandabschnitt soll ein Bördel verstanden werden, der um mindestens 80 %, insbesondere mindestens 90 %, der Längsausdehnung des Außenrandes der anderen Metalllage umgebördelt wurde. Die nicht mit einem Bördel versehenen Bereiche können beispielsweise als Entlüftungsöffnungen oder zu ähnlichen Zwecken dienen. Bevorzugt ist es jedoch, wenn der Bördel vollständig um den Außenrand des Hitzeschildes umläuft.

Erfindungsgemäß ist der Außenrandabschnitt nur bereichsweise in zumindest einem Teilbereich an die zweite Metalllage geschweißt. Dieser wenigstens eine angeschweißte Teilbereich befindet sich bevorzugt in solchen Bereichen des Außenrandabschnittes, die stärker dreidimensional verformt sind als die anderen Bereiche des Außenrandabschnittes. Der angeschweißte Teilbereich sichert den umgebördelten Außenrandabschnitt trotz starker auf ihn wirkender Spannungen gegen ein Aufgehen und verhindert gleichzeitig eine Rissbildung in diesem Bereich. Anzahl und Anordnung der Teilbereiche richten sich dabei hauptsächlich nach der Form des dreidimensionalen Hitzeschildes. Zweckmäßig werden diese geschweißten Teilbereiche an allen solchen Stellen des Außenrandes des Hitzeschildes angeordnet, die besonders starken Verformungen und Spannungen ausgesetzt sind. Entsprechend diesen Kriterien wird auch die Ausdehnung der Teilbereiche gewählt. Üblicherweise wird ein Teilbereich eine Länge von bis zu 50 mm und in aller Regel von nicht mehr als 30 mm aufweisen. Auch bei Verwendung mehrerer Teilbereiche entlang des Außenrandabschnittes sind diese in jedem Fall nur bereichsweise vorhanden. Es ist also nicht erforderlich, die beiden Metalllagen entlang des gesamten Außenrandes des Hitzeschildes miteinander zu verschweißen. Dies vermindert Zeitaufwand und Kosten bei der Herstellung des Hitzeschildes erheblich. Außerdem ist es nicht erforderlich, den Hitzeschild bei der Herstellung in einzelne Teilsegmente aufzuteilen, die gesondert hergestellt und anschließend miteinander verbunden werden müssten. Auch dies bedeutet eine erhebliche Zeit- und Kosteneinsparung.

Der Hitzeschild wird erfindungsgemäß dadurch hergestellt, dass erste und zweite Metalllage als im Wesentlichen plane Lagen übereinander angeordnet werden. Dabei nimmt die erste Metalllage eine größere Fläche als die zweite Metalllage ein, so dass der Außenrandabschnitt der ersten Metalllage um den Außenrand der zweiten Metalllage umgebördelt werden kann und auf der zweiten Metalllage zu liegen kommt. Der umgebördelte Außenrandabschnitt der ersten Metalllage umläuft dabei den Außenrand der zweiten Metalllage im Wesentlichen vollständig und verbindet auf diese Weise erste und zweite Metalllage miteinander. Unter im Wesentlichen planen Lagen sollen solche Metalllagen verstanden werden, bei denen ein überwiegender Teil ihrer Grundfläche innerhalb einer Ebene liegt. Dies umfasst zum Beispiel Lagen, in die bereits Sicken eingeprägt wurden, die beispielsweise Material für das spätere dreidimensionale Verformen bereitstellen. Auch können in der im Wesentlichen planen ersten Metalllage die Außenrandabschnitte bereits aufgestellt sein, die später als Bördel auf die zweite Metalllage herunter gebogen werden. Eine solche napfartige Zwischenstufe der ersten Metalllage kann die zweite Metalllage und vor allem eine zwischen beiden Metalllagen angeordnete Isolationsschicht besonders gut aufnehmen. Das Zudrücken der Außenrandabschnitte kann zweckmäßig gemeinsam mit dem Einprägen eventuell vorhandener Sicken erfolgen. Nach dem Umbördeln wird der Außenrandabschnitt der ersten Metalllage bereichsweise innerhalb des zumindest einen Teilbereichs des Außenrandabschnitts an die zweite Metalllage im Bereich des Bördels angeschweißt. Erst danach werden erste und zweite Metalllage dreidimensional verformt, um den erfindungsgemäßen Hitzeschild zu ergeben. Durch das Anschweißen des Außenrandabschnitts in dem zumindest einen Teilbereich wird verhindert, dass beim Verformen der Metalllagen im Bereich des Bördels Risse entstehen oder der Bördel nach dem Verformen aufgeht.

Das Schweißen kann als Punktschweißen, Laserschweißen oder besonders bevorzugt als Kondensator-Endadungsschweißen durchgeführt werden. Wenn zwischen erster und zweiter Metalllage eine Isolationslage angeordnet wird, ist es bevorzugt, dass diese zumindest die zu schweißenden Teilbereiche im umbördelten Außenrandabschnitt freilässt, damit für das Schweißen ein ausreichender elektrischer Kontakt zur Verfügung steht. Im Falle des Punktschweißens oder Laserschweißens ist darauf zu achten, dass der umbördelte Außenrandabschnitt fest auf der zweiten Metalllage aufliegt. Es sollte also kein Luftspalt zwischen dem umbördelten Außenrandabschnitt der ersten Metalllage und der zweiten Metalllage vorhanden sein, der die Festigkeit einer Laserschweißverbindung beeinträchtigen könnte. Ein solcher Luftspalt würde auch beim Punktschweißen stören, da die üblicherweise verwendeten Kupferelektroden zum nachträglichen festen Anpressen der Metalllagen aufeinander nur schlecht geeignet sind. Außerdem muss beim Punktschweißen auf eine geeignete Einstellung von Druck und Stromstärke zueinander geachtet werden. Unter Beachtung dieser Hinweise kann der Schweißschritt jedoch auf grundsätzlich bekannte Weise mit den aus dem Stand der Technik bekannten Werkzeugen durchgeführt werden.

Der Verfahrensschritt des Anschweißens des umbördelten Außenrandabschnittes an die zweite Metalllage fügt sich ohne weiteres in die anderen Verfahrensschritte zur Herstellung eines erfindungsgemäßen Hitzeschildes ein. Die übrigen Verfahrensschritte können auf an sich bekannte Art und Weise mit den bisher üblichen Werkzeugen durchgeführt werden. Das Freistanzen der Außenkonturen von erster und zweiter Metalllage und das Einstanzen von Durchgangsöffnungen in diese Metalllagen erfolgen also zweckmäßig mit einem herkömmlichen Stanzwerkzeug. Dabei können das Freistanzen der Außenkonturen und das Einstanzen der Durchgangsöffnungen in einem einzigen Schritt erfolgen. Bevorzugt ist es jedoch, die Durchgangsöffnungen erst nach dem Umbördeln und Verschweißen des Außenrandabschnitts und besonders erst nach dem dreidimensionalen Verformen gleichzeitig in beide Metalllagen einzustanzen. Die Stanzschritte können auch durch Laserschneiden ersetzt werden. Das Umbördeln des Außenrandabschnitts erfolgt mit einem herkömmlichen Bördelwerkzeug. Zweckmäßig ist es, die durch Bördeln miteinander verbundenen Metalllagen noch innerhalb des Bördelwerkzeugs in dem zumindest einen Teilbereich des umbördelten Außenrandabschnitts miteinander zu verschweißen. Erst im Anschluss an den Schweißvorgang wird die Hitzeschild-Vorform dann zweckmäßigerweise in einem üblichen Prägewerkzeug dreidimensional verformt, um den erfindungsgemäßen Hitzeschild zu ergeben.

Die Schweißverbindung im Teilbereich des Außenrandabschnittes kann grundsätzlich jede beliebige Form aufweisen, die geeignet ist, für einen hinreichenden Zusammenhalt zwischen erster und zweiter Metalllage zu sorgen. Bevorzugt ist die Schweißverbindung als Linien- oder Punktnaht ausgebildet, die entlang des Randes des Außenrandabschnitts der ersten Metalllage verläuft. Wie bereits erwähnt, weisen die Teilbereiche, in denen die Schweißverbindung hergestellt wird, bevorzugt eine Länge von bis zu 50 mm und insbesondere bis zu 30 mm auf. Die Breite des umgebördelten Außenrandabschnitts beträgt zweckmäßig zwischen 1 und 6 mm und insbesondere zwischen 3 und 4 mm. In dem wenigstens einen Teilbereich, in welchem eine Schweißverbindung vorhanden ist, kann die Breite des umgebördelten Außenrandabschnittes zudem gegenüber den benachbarten Bereichen in ihrer Breite reduziert werden. Auf diese Weise lassen sich die auf das Material einwirkenden Spannungen in diesem Bereich weiter verringern. Es ist dabei jedoch darauf zu achten, dass die Bördelbreite nicht so weit verringert wird, dass keine Überlappung mit der zweiten Metalllage mehr erfolgt. Außerdem sollte der Bördel auch nicht so sehr verschmälert werden, dass die zur Herstellung der Schweißverbindung verwendeten Elektroden zu schnell verschleißen.

Die besonders kritischen Stellen entlang des Außenrandabschnittes, die zweckmäßig Teilbereiche zur Anordnung einer Schweißverbindung bilden, sind insbesondere solche, bei denen sich das Material des Außenrandabschnittes, der den Bördel bildet, beim dreidimensionalen Verformen der Metalllagen um mindestens 10 % und insbesondere um mindestens 20 % gegenüber dem Ausgangszustand vor dem dreidimensionalen Verformen dehnen müsste. Besonders sind dabei Materialdehnungen in der Längserstreckungsrichtung des Außenrandabschnittes zu beachten. Derartige starke Materialdehnungen führen in aller Regel dazu, dass in diesem Bereich des Bördels entweder Risse entstehen oder der Bördel sich von der zweiten Metalllage weg nach außen aufstülpt.

Besonders mit Spannungen belastet sind diejenigen Teilbereiche des Außenrandabschnittes, die in nach innen eingekrümmten Bereichen der Außenkontur der ersten Metalllage liegen. Hier treten bereits beim Umbördeln des Außenrandabschnittes in der im Wesentlichen planen ersten Metalllage besonders starke Belastungen des Außenrandabschnittes auf, da das Material in diesem Bereich beim Umbördeln um die eingewölbte Biegekante gedehnt werden muss. Die Stärke der Krümmung lässt sich anhand des Krümmungsradius festlegen. Kritische Bereiche, die als Teilbereiche in Frage kommen, in denen eine Schweißverbindung angeordnet werden sollte, sind solche mit einem Krümmungsradius von mindestens 12 mm und vor allem solche, in denen der Krümmungsradius zwischen 12 und 40 mm liegt. Üblicherweise bedeutet ein derartiger Krümmungsradius, dass das Material dieses Teilbereichs des Außenrandabschnittes beim Umbördeln eine Dehnung in Längserstreckungsrichtung des Außenrandabschnittes von mindestens 30 % gegenüber dem nicht gebördelten Zustand erfährt. Häufig werden Dehnungen von 40 % oder mehr beobachtet. Die zu erwartenden Dehnungen können ebenfalls als Kriterium dafür herangezogen werden, in welchen Bereichen des Außenrandabschnittes sinnvollerweise Schweißverbindungen erzeugt werden. Abschließend klären lässt sich dies durch Vorversuche, bei denen überprüft wird, in welchen Bereichen des Außenrandabschnitts Risse auftreten oder der Bördel aufsteht. Hier werden dann erfindungsgemäß Schweißverbindungen angelegt, um den Außenrandabschnitt an der zweiten Metalllage zu sichern.

Die vorstehend beschriebenen Bereiche sind besonders von Rissbildung und dem Öffnen des Bördels bedroht, da in ihnen der Bördel bereits vor dem dreidimensionalen Verformen unter Spannung steht. Die Gefahr der Rissbildung und des Aufgehens des Bördels steigt zusätzlich, wenn in diesen Bereichen beim dreidimensionalen Verformen weitere Spannungen aufgebaut werden. Dies kann zum Beispiel der Fall sein, wenn zusätzlich zur Längendehnung Querspannungen hinzukommen, beispielsweise, wenn auch noch eine Verformung in Richtung der Bördelbreite nach oben oder nach unten erfolgt. Auch zusätzliche Längenausdehnungen durch Umformung auf einen größeren Radius oder ähnliches können zu Fehlern in diesem Bördelbereich führen. Als Faustregel kann gelten, dass eine (zusätzliche) Materialdehnung um mindestens 10 % und insbesondere um 20 % oder mehr beim Umformen der Vorform in die dreidimensionale Endform Fehler verursacht. Erfindungsgemäß ist es daher besonders bevorzugt, in diesen Teilbereichen Schweißverbindungen vorzusehen.

Die Erfindung soll nachfolgend anhand von Zeichnungen weiter erläutert werden. Diese Zeichnungen dienen lediglich der Beschreibung einer besonders bevorzugten Ausführungsform der Erfindung, ohne dass diese jedoch auf das gezeigte Beispiel beschränkt wäre. In den Figuren zeigen schematisch:
- Figur 1 einen erfindungemäßen Hitzeschild in perspektivischer Seitenansicht;
- Figur 2 eine perspektivische Ansicht der Innenseite des Hitzeschildes gemäß Figur 1;
- Figur 3 eine Draufsicht auf die Innenseite des Hitzeschildes gemäß Figur 1;
- Figur 4 einen Querschnitt entlang der Linie A-A der Figur 2 und
- Figur 5 eine perspektivische Ansicht der Innenseite eines nicht erfindungsgemäßen Hitzeschildes.

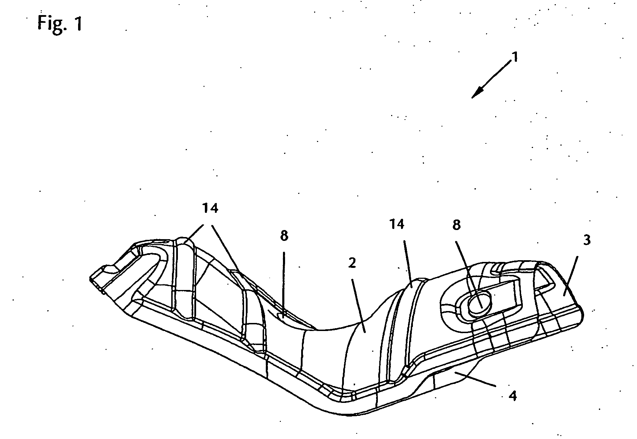

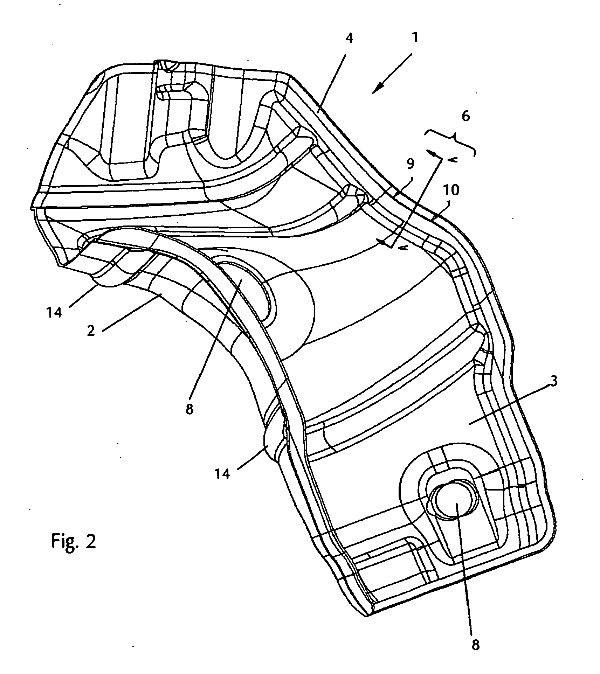

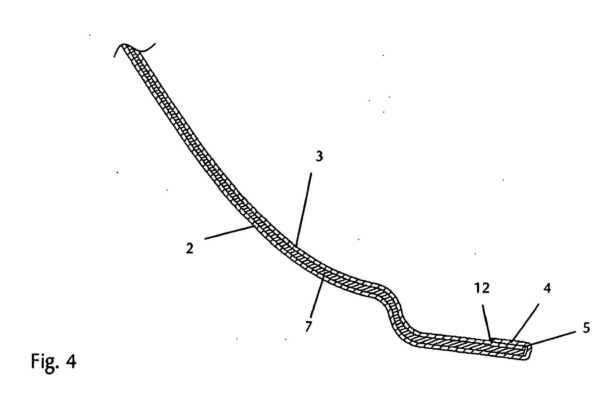

Figuren 1 bis 5 zeigen jeweils einen Hitzeschild 1 in Sandwich-Bauweise. Der Hitzeschild 1 besteht aus einer äußeren Metallplatte 2 und einer zur Innenseite, in Richtung auf den vom Hitzeschild 1 umgebenen Hohlraum weisenden zweiten Metallplatte 3. Die Metallplatten 2 und 3 können beispielsweise aus Stahl, aluminiumplattiertem Stahl oder Aluminium bestehen. Zwischen den Metallplatten 2 und 3 ist eine Isolationsschicht 7 angeordnet, die beispielsweise aus Glimmer, hitzebeständigem Papier, anorganischem oder organischem Faserverbundmaterial besteht. Die drei Lagen 2, 3 und 7 sind dadurch miteinander verbunden, dass ein Außenrandabschnitt 4 der ersten Metallplatte 2 um den Außenrand 5 der zweiten Metallplatte 3 herum auf die zweite Metallplatte 3 zurück umgebördelt ist (vgl. Figur 4). Der so gebildete Bördel läuft entlang der gesamten Außenkante des Hitzeschildes 1 geschlossen um (siehe insbesondere Fig. 2). Die Breite des umgebördelten Außenrandabschnittes 4 beträgt etwa 3 bis 3,5 mm. In der Fläche der Lagen 2 und 3 sind mehrere Sicken 14 vorhanden, die hauptsächlich dem Zweck dienen, Material für den Umformprozess bereitzustellen. Außerdem weisen die Lagen 2, 3 und 7 Durchgangsöffnungen 8 auf, die entweder als Schraubendurchgangslöcher dienen oder durch die beispielsweise Messsonden oder ähnliches geführt werden können.

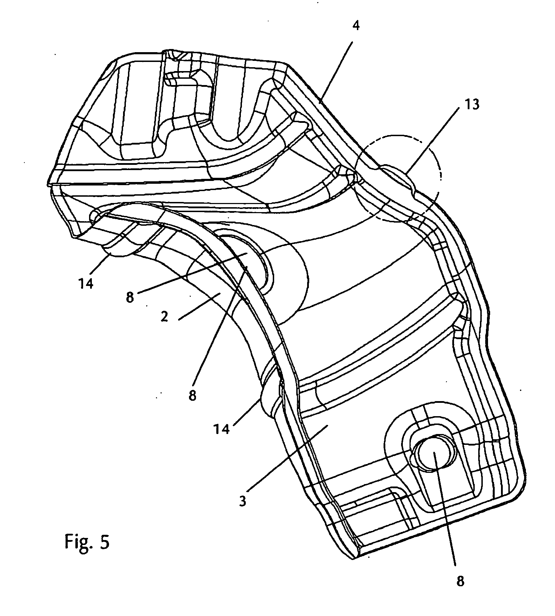

Der erfindungsgemäße Hitzeschild 1 ist stark dreidimensional verformt. Von Längskante zu Längskante ist er in etwa U-förmig aufgebogen, während er zwischen den Schmalseiten in etwa V-förmig geknickt ist. Die Formgebung erfolgt dadurch, dass die - abgesehen von den umgebördelten Außenrandabschnitten 4 und den Sicken 14 - zunächst planen Metalllagen 2 und 3 und die zwischen ihnen liegende Isolationsschicht 7 in einer geeigneten Prägeform in die dreidimensionale Form geprägt werden. Bei diesem Prägevorgang wirken starke Kräfte auf das Material der metallischen Lagen 2 und 3. Die dabei im Bereich des umgebördelten Außenrandabschnitts 4 auftretenden Spannungen und Dehnungen können dazu führen, dass das Material im umgebördelten Außenrandabschnitt 4 aufreißt oder der Bördel von der zweiten Metalllage 3 weg aufsteht. Dies ist in Figur 5 gezeigt. Im rechten, eingekreisten Bereich der Figur ist ein mit 13 bezeichneter Abschnitt des Außenrandabschnittes 4 von der zweiten Metalllage 3 abgehebelt worden und steht nun nach außen auf.

Um derartige Fehler zu verhindern, wird im erfindungsgemäßen Hitzeschild gemäß Figuren 1 bis 4 der Außenrandabschnitt 4 in diesem kritischem Teilbereich mittels einer Schweißverbindung 12 gesichert. Der mit einer Schweißverbindung gesicherte Teilbereich des Außenrandabschnitts 4 ist in Figur 2 mit 6 bezeichnet. In diesem Teilbereich 6 wird zwischen den Punkten 9 und 10 eine Schweißverbindung erzeugt, mit welcher der Außenrandabschnitt 4 an die zweite Metalllage 3 angeschweißt wird. Wie Figur 4 zu entnehmen ist, verläuft die Schweißnaht 12 als Linienschweißnaht entlang der Außenkante des Außenrandabschnittes 4. Die Schweißverbindung 12 wird erzeugt, bevor die - abgesehen von dem Bördel und den Sicken - ebenen Metallplatten 2 und 3 dreidimensional verformt werden.

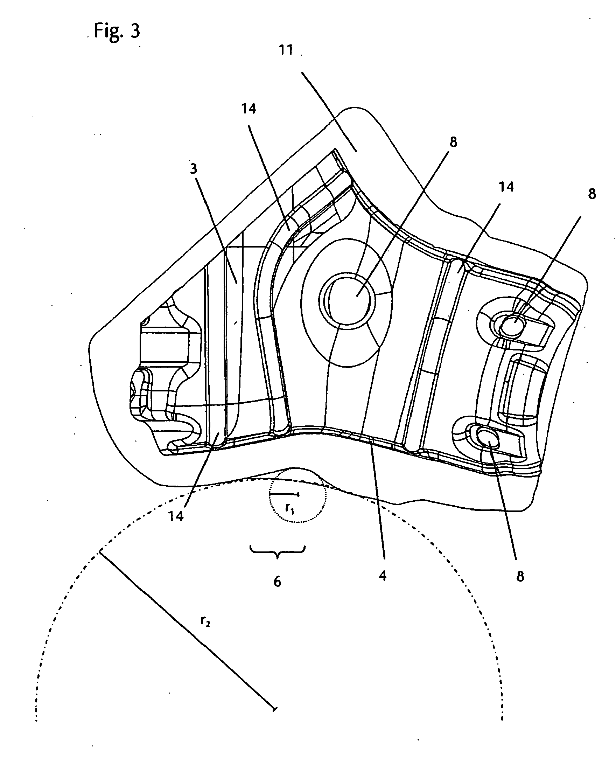

Wie Figuren 1 bis 3 zu entnehmen ist, befindet sich der Teilbereich 6, in dem die Schweißverbindung erzeugt wird, in einem Bereich des Hitzeschildes, in dem die Kontur des Außenrandabschnittes 4 zum Inneren des Hitzeschildes hin eingewölbt ist. Hier treten bereits beim Umbördeln Spannungen im Material auf, da es stark gedehnt werden muss. Fig. 3 verdeutlicht dies. Hier ist einerseits die mit 11 bezeichnete Hitzeschild-Vorform vor dem dreidimensionalen Verformen anhand ihrer Außenkontur wiedergegeben. Zum Vergleich ist der verformte Hitzeschild innerhalb der Kontur eingezeichnet. Der kritische Teilbereich 6 ist im unteren Bereich der Figur dargestellt. Die Vorform 11 weist hier eine stark nach innen eingewölbte Außenkontur auf, deren Krümmungsradius mit r₁ bezeichnet ist und etwa 33 mm beträgt. Dies entspricht in etwa einer Materialdehnung in diesem Bördelbereich von 40 %.

Beim dreidimensionalen Verformen der Vorstufe in die endgültige Form wird diese einerseits U-förmig aufgewölbt. Gleichzeitig befindet sich der Teilbereich 6 im Bereich des V-förmigen Knicks des Hitzeschildes 1, der sich am besten in Figur 1 erkennen lässt. Um diese Form zu erreichen, muss die Vorstufe im Teilbereich 6 nach außen herausgezogen werden, was zu einer Vergrößerung des Krümmungsradius in diesem Bereich führt. Der Kantenverlauf der Endform ist zur Verdeutlichung als gestrichelte Linie neben den Außenkonturverlauf der Vorstufe 11 gezeichnet. Der Krümmungsradius r₂ ist gegenüber dem Krümmungsradius r₁ stark vergrößert, was einer weiteren Materialdehnung im Teilbereich 6 von etwas 38 % entspricht. Aufgrund dessen ist die Wahrscheinlichkeit, dass sich der Bördel bei der dreidimensionalen Verformung der Lagen 2, 3 und 7 von der zweiten Metalllage 3 weg nach außen öffnet oder gar reißt, besonders groß. Um dies zu verhindern, wird gerade an dieser Stelle der Außenrandabschnitt 4 durch die Schweißverbindung 12 gesichert. Dadurch kann das Auftreten von Fehlern im Bördelbereich sicher verhindert werden.

## Patentansprüche

1. Hitzeschild (1) mit einer ersten und einer zweiten gemeinsam dreidimensional verformten Metalllage (2, 3), die **dadurch** miteinander verbunden sind, dass ein Außenrandabschnitt (4) der ersten Metalllage (2) im Wesentlichen vollständig umlaufend um den Außenrand (5) der zweiten Metalllage (3) herum auf die zweite Metalllage (3) gebördelt ist, und
**dass** der Außenrandabschnitt (4) nur bereichsweise in zumindest einem Teilbereich (6) an die zweite Metalllage (3) geschweißt ist.

2. Hitzeschild gemäß Anspruch 1,
**dadurch gekennzeichnet,**
**dass** der zumindest eine Teilbereich (6) relativ zu anderen Bereichen des Außenrandabschnittes (4) stärker dreidimensional verformt ist.

3. Hitzeschild gemäß Anspruch 1 oder 2,
**dadurch gekennzeichnet,**
**dass** der zumindest eine Teilbereich (6) in einem nach innen gekrümmten Bereich des Außenrandabschnittes (4) liegt.

4. Hitzeschild gemäß Anspruch 3,
**dadurch gekennzeichnet,**
**dass** der nach innen gekrümmte Bereich des Außenrandabschnittes (4) zusätzlich in einer Bördelbreitenrichtung nach oben oder unten gekrümmt ist.

5. Hitzeschild gemäß einem der vorhergehenden Ansprüche,
**dadurch gekennzeichnet,**
**dass** er durch Verformen zweier im Wesentlichen planer Metalllagen (2, 3) erhalten wurde, wobei der zumindest eine Teilbereich (6) in einen Bereich des Außenrandabschnittes (4) liegt, der bei der dreidimensionalen Verformung der Metalllagen (2, 3) einer Materialdehnung von mindestens 10 %, insbesondere von mindestens 20 %, unterliegt.

6. Hitzeschild gemäß einem der vorhergehenden Ansprüche,
**dadurch gekennzeichnet,**
**dass** der Außenrandabschnitt (4) eine Breite von 1 bis 6 mm und insbesondere von 3 bis 4 mm aufweist.

7. Hitzeschild gemäß einem der vorhergehenden Ansprüche,
**dadurch gekennzeichnet,**
**dass** die Breite des Außenrandabschnittes (4) im zumindest einen Teilbereich (6) geringer ist als diejenige außerhalb des Teilbereiches (6).

8. Hitzeschild gemäß einem der vorhergehenden Ansprüche,
**dadurch gekennzeichnet,**
**dass** der zumindest eine Teilbereich (6) eine Länge von bis zu 50 mm und insbesondere bis zu 30 mm aufweist.

9. Hitzeschild gemäß einem der vorhergehenden Ansprüche,
**dadurch gekennzeichnet,**
**dass** die Schweißverbindung als Linien- oder Punktschweißnaht entlang des Randes des Außenrandabschnittes (4) ausgebildet ist.

10. Hitzeschild gemäß einem der vorhergehenden Ansprüche,
**dadurch gekennzeichnet,**
**dass** zwischen den Metalllagen (2, 3) eine Isolationslage (7) angeordnet ist.

11. Hitzeschild gemäß Anspruch 10,
**dadurch gekennzeichnet,**
**dass** die Isolationslage (7) im Bereich des umgebördelten Außenrandabschnittes (4) nicht vorhanden ist.

12. Verfahren zur Herstellung eines Hitzeschildes gemäß einem der Ansprüche 1 bis 11, **gekennzeichnet durch** die folgenden Schritte:
a) Anordnen einer ersten und einer zweiten, im Wesentlichen planen Metalllage (2, 3) übereinander,
b) Umbördeln des Außenrandabschnittes (4) der ersten Metalllage (2) um den Außenrand (5) der zweiten Metalllage (3) auf die zweite Metalllage (3), so dass der Bördel den Außenrand (5) der zweiten Metalllage (3) im Wesentlichen vollständig umläuft und erste und zweiten Metalllage (2, 3) miteinander verbindet,
c) bereichsweises Anschweißen des zumindest einen Teilbereichs (6) des Außenrandabschnittes (4) an die zweite Metalllage (3) im Bereich des Bördels und anschließend
d) dreidimensionales Verformen von erster und zweiter Metalllage (2, 3).

13. Verfahren nach Anspruch 12,
**dadurch gekennzeichnet,**
**dass** Schritt c) als Punktschweißen, Laserschweißen und insbesondere Kondensator-Entladungsschweißen durchgeführt wird.

14. Verfahren nach Anspruch 12 oder 13,
**dadurch gekennzeichnet,**
**dass** Schritt c) im Bördelwerkzeug durchgeführt wird.

15. Verfahren nach einem der Ansprüche 12 bis 14,
**dadurch gekennzeichnet,**
**dass** die nach Schritten a) und b) erhaltene Hitzeschild-Vorform (11) in einem Teilbereich (6) geschweißt wird, dessen Material beim Umbördeln des Außenrandabschnittes (4) eine Materialdehnung in Längserstreckungsrichtung von mindestens 30 % und insbesondere von mindestens 40 % erfahren hat.

16. Verfahren nach einem der Ansprüche 12 bis 15,
**dadurch gekennzeichnet,**
**dass** die nach Schritten a) und b) erhaltene Hitzeschild-Vorform (11) in einem Teilbereich (6) geschweißt wird, der in einem nach innen eingekrümmten Bereich des Außenrandabschnittes (4) liegt.

17. Verfahren nach Anspruch 16,
**dadurch gekennzeichnet,**
**dass** der nach innen eingekrümmte Bereich des Außenrandabschnittes (4) einen Krümmungsradius von mindestens 12 mm und insbesondere von 12 bis 40 mm aufweist.

18. Verfahren nach einem der Ansprüche 12 bis 17,
**dadurch gekennzeichnet,**
**dass** die nach Schritten a) bis c) erhaltene Hitzeschild-Vorform (11) in einem Teilbereich (6) geschweißt wird, dessen Material bei der dreidimensionalen Verformung der Hitzeschild-Vorform gemäß Schritt d) eine Materialdehnung in Längserstreckungsrichtung des Außenrandabschnittes (4) von mindestens 10 % und insbesondere mindestens 20 % erfährt.

19. Verfahren nach einem der Ansprüche 12 bis 18,
**dadurch gekennzeichnet,**
**dass** in Schritt a) eine Isolationsschicht (7) dergestalt zwischen erster und zweiter Metalllage (2, 3) angeordnet wird, dass sie die zu schweißenden Teilbereiche (6) freilässt.

## Claims

1. A heat shield (1) having a first and a second commonly three-dimensionally deformed metal layer (2, 3), which are connected to one another in that an outer edge section (4) of the first metal layer (2) is flanged around the second metal layer (3) around essentially the entire circumference of the outer edge (5) of the second metal layer (3) and in that the outer edge section (4) is welded only regionally to the second metal layer (3) in at least one partial area (6).

2. The heat shield according to Claim 1,
**characterized in that** the at least one partial area (6) is three-dimensionally deformed more strongly than other areas of the outer edge section (4).

3. The heat shield according to Claim 1 or 2,
**characterized in that** the at least one partial area (6) lies in an inwardly curved area of the outer edge section (4).

4. The heat shield according to Claim 3,
**characterized in that** the inwardly curved area of the outer edge section (4) is additionally curved upward or downward in a flange width direction.

5. The heat shield according to one of the preceding claims,
**characterized in that** it was obtained by deforming two essentially planar metal layers (2, 3), the at least one partial area (6) lying in an area of the outer edge section (4) which is subject to a material stretch of at least 10 %, particularly of at least 20 %, during the three-dimensional deformation of the metal layers (2, 3).

6. The heat shield according to one of the preceding claims,
**characterized in that** the outer edge section (4) has a width of 1 to 6 mm and particularly of 3 to 4 mm.

7. The heat shield according to one of the preceding claims,
**characterized in that** the width of the outer edge section (4) is less in the at least one partial area (6) than the width outside the partial area (6).

8. The heat shield according to one of the preceding claims,
**characterized in that** the at least one partial area (6) has a length of up to 50 mm and particularly up to 30 mm.

9. The heat shield according to one of the preceding claims,
**characterized in that** the weld bond is implemented as a linear or spot weld seam along the edge of the outer edge section (4).

10. The heat shield according to one of the preceding claims,
**characterized in that** an insulating layer (7) is situated between the metal layers (2, 3).

11. The heat shield according to Claim 10,
**characterized in that** the insulating layer (7) is not provided in the area of the flanged outer edge section (4).

12. A method for producing a heat shield according to one of Claims 1 through 11,
**characterized by** the following steps:
a) situating a first and a second essentially planar metal layer (2, 3) one over another,
b) flanging the outer edge section (4) of the first metal layer (2) around the outer edge (5) of the second metal layer (3) on the second metal layer (3), so that the flange runs around essentially the entire outer edge (5) of the second metal layer (3) and connects the first and second metal layers (2, 3) to one another,
c) regionally welding the at least one partial area (6) of the outer edge section (4) to the second metal layer (3), and subsequently
d) three-dimensionally deforming the first and second metal layers (2, 3).

13. The method according to Claim 12,
**characterized in that** step c) is performed as spot welding, laser welding, and particularly capacitor-discharge welding.

14. The method according to Claim 12 or 13,
**characterized in that** step c) is performed in the flanging tool.

15. The method according to one of Claims 12 to 14,
**characterized in that** the heat shield preform (11) obtained after steps a) and b) is welded in a partial area (6) whose material has experienced a material stretch in the longitudinal extension direction of at least 30 % and particularly of at least 40 % during the flanging of the outer edge section (4).

16. The method according to one of Claims 12 to 15,
**characterized in that** the heat shield preform (11) obtained after steps a) and b) is welded in a partial area (6) which lies in an inwardly curved area of the outer edge section (4).

17. The method according to Claim 16,
**characterized in that** the inwardly curved area of the outer edge section (4) has a radius of curvature of at least 12 mm and particularly of from 12 to 40 mm.

18. The method according to one of Claims 12 to 17,
**characterized in that** the heat shield preform (11) obtained after steps a) through c) is welded in a partial area (6) whose material experiences a material stretch in the longitudinal extension direction of the outer edge section (4) of at least 10 % and particularly at least 20 % during the three-dimensional deformation of the heat shield preform according to step d).

19. The method according to one of Claims 12 to 18,
**characterized in that**, in step a), an insulating layer (7) is situated between the first and second metal layers (2, 3) in such a way that it leaves the partial areas (6) to be welded exposed.

## Revendications

1. Bouclier thermique (1) avec une première et une deuxième couches métalliques (2, 3) déformées ensemble dans trois dimensions et reliées entre elles par le fait qu'une partie de bord extérieur (4) de la première couche métallique (2) est rabattue de façon sensiblement continue sur la circonférence du bord extérieur (5) de la deuxième couche métallique (3) par-dessus la deuxième couche métallique (3), et en ce que la partie de bord extérieur (4) n'est soudée que par zones, dans au moins une zone partielle (6), à la deuxième couche métallique (3).

2. Bouclier thermique selon la revendication 1, **caractérisé en ce que** l'au moins une zone partielle (6) est plus fortement déformée dans trois dimensions que les autres zones de la partie de bord extérieur (4).

3. Bouclier thermique selon la revendication 1 ou 2, **caractérisé en ce que** l'au moins une zone partielle (6) se trouve dans une zone de la partie de bord extérieur (4) recourbée vers l'intérieur.

4. Bouclier thermique selon la revendication 3, **caractérisé en ce que** la zone de la partie de bord extérieur (4) recourbée vers l'intérieur est en outre courbée vers le haut ou le bas dans le sens d'une largeur de bordage.

5. Bouclier thermique selon l'une des revendications précédentes, **caractérisé en ce qu'**il est obtenu par déformation de deux couches métalliques (2, 3) sensiblement planes, l'au moins une zone partielle (6) se trouvant dans une zone de la partie de bord extérieur (4) qui subit, lors de la déformation dans trois dimensions des couches métalliques (2, 3), un allongement du matériau d'au moins 10 %, en particulier d'au moins 20 %.

6. Bouclier thermique selon l'une des revendications précédentes, **caractérisé en ce que** la partie de bord extérieur (4) a une largeur de 1 à 6 mm et en particulier de 3 à 4 mm.

7. Bouclier thermique selon l'une des revendications précédentes, **caractérisé en ce que** la largeur de la partie de bord extérieur (4) est plus petite dans au moins une zone partielle (6) que celle en dehors de la zone partielle (6).

8. Bouclier thermique selon l'une des revendications précédentes, **caractérisé en ce que** l'au moins une zone partielle (6) a une longueur pouvant aller jusqu'à 50 mm et en particulier jusqu'à 30 mm.

9. Bouclier thermique selon l'une des revendications précédentes, **caractérisé en ce que** la soudure est conformée comme une soudure en ligne ou par points le long du bord de la partie de bord extérieur (4).

10. Bouclier thermique selon l'une des revendications précédentes, **caractérisé en ce qu'**il est prévu entre les couches métalliques (2, 3) une couche d'isolation (7).

11. Bouclier thermique selon la revendication 10, **caractérisé en ce que** la couche d'isolation (7) est absente au niveau de la partie de bord extérieur (4) rabattue.

12. Procédé pour la fabrication d'un bouclier thermique selon l'une des revendications 1 à 11, **caractérisé en ce qu'**il comprend les étapes suivantes :
a) disposition d'une première couche métallique et d'une deuxième (2, 3), sensiblement planes, l'une par-dessus l'autre ;
b) bordage de la partie de bord extérieur (4) de la première couche métallique (2) autour du bord extérieur (5) de la deuxième couche métallique (3) sur la deuxième couche métallique (3), de sorte que le bord rabattu entoure pour l'essentiel complètement le bord extérieur (5) de la deuxième couche métallique (3) et relie entre elles les première et deuxième couches métalliques (2, 3) ;
c) soudage par zones de l'au moins une zone partielle (6) de la partie de bord extérieur (4) à la deuxième couche métallique (3) au niveau du bord rabattu, puis
d) déformation dans trois dimensions des première et deuxième couches métalliques (2, 3).

13. Procédé selon la revendication 12, **caractérisé en ce que** l'étape c) est exécutée par soudage par points, soudage par laser et en particulier soudage par décharge de condensateur.

14. Procédé selon la revendication 12 ou 13, **caractérisé en ce que** l'étape c) est exécutée dans l'outil à border.

15. Procédé selon l'une des étapes 12 à 14, **caractérisé en ce que** l'ébauche de bouclier thermique (11) obtenue après les étapes a) et b) est soudée dans une zone partielle (6) dont le matériau a subi, lors du bordage de la partie de bord extérieur (4), un allongement du matériau dans le sens de l'étendue longitudinale d'au moins 30 % et en particulier d'au moins 40 %.

16. Procédé selon l'une des étapes 12 à 15, **caractérisé en ce que** l'ébauche de bouclier thermique (11) obtenue après les étapes a) et b) est soudée dans une zone partielle (6) qui se trouve dans une zone de la partie de bord extérieur (4) recourbée vers l'intérieur.

17. Procédé selon la revendication 16, **caractérisé en ce que** la partie de bord extérieur (4) recourbée vers l'intérieur présente un rayon de courbure d'au moins 12 mm et en particulier de 12 à 40 mm.

18. Procédé selon l'une des étapes 12 à 17, **caractérisé en ce que** l'ébauche de bouclier thermique (11) obtenue après les étapes a) et b) est soudée dans une zone partielle (6) dont le matériau a subi, lors de la déformation dans trois dimension de l'ébauche de bouclier thermique selon l'étape d), un allongement du matériau dans le sens de l'étendue longitudinale de la partie de bord extérieur (4) d'au moins 10 % et en particulier d'au moins 20 %.

19. Procédé selon l'une des étapes 12 à 18, **caractérisé en ce qu'**une couche d'isolation (7) est disposée dans l'étape a) entre la première couche métallique et la seconde (2, 3), de manière à laisser libres les zones partielles (6) à souder.
